# EUROPÄISCHE PATENTSCHRIFT

(11) **EP 2 825 907 B1**
(45) Veröffentlichungstag und Bekanntmachung des Hinweises auf die Patenterteilung: **08.06.2016**
(21) Anmeldenummer: 12759782.1
(22) Anmeldetag: 21.09.2012
(51) Int. Cl.: G02B 7/04, G02B 15/14, G02B 5/00, H04N 5/225, H04N 5/232, H04N 5/30, G02B 7/10, G01C 15/00, G03B 5/00

(54) **KAMERASYSTEM MIT EINEM ZOOMOBJEKTIV UND EINEM LINEARENCODER**
CAMERA SYSTEM WITH A ZOOM LENS AND A LINEAR ENCODER
CAMÉRA DOTÉE D'UN OBJECTIF À ZOOM ET D'UN ENCODEUR LINÉAIRE

(30) Priorität: 13.03.2012 EP 12159332
(43) Veröffentlichungstag der Anmeldung: 21.01.2015
(73) Patentinhaber: Leica Geosystems AG, 9435 Heerbrugg (CH)
(72) Erfinder: LÜSCHER, Marco, ch-5200 bRUGG (CH); MAKSIMOVIC, Veroljub, CH-4562 Biberist (CH)
(74) Vertreter: Gyaja, Christoph Benjamin
(86) Internationale Anmeldenummer: PCT/EP2012/068708
(87) Internationale Veröffentlichungsnummer: WO 2013/135313

(56) Entgegenhaltungen:
- EP-A1- 1 510 846
- US-A1- 2002 093 745

## Beschreibung

Die vorliegende Erfindung betrifft ein Kamerasystem mit einem Zoomobjektiv mit beweglichen Zoom-Optikbaugruppen und einem Linearencoder, insbesondere für den Einsatz in Vermessungsgeräten, sowie einen Lasertracker mit einem solchen Kamerasystem.

Kamerasysteme der vorliegenden Art finden vor allem in Lasertrackern Verwendung. Lasertracker nach dem Stand der Technik sind zumeist mit einer optischen Bilderfassungseinheit mit einem zweidimensionalen, lichtempfindlichen Array, zum Beispiel einer CCD- oder CID-Kamera oder einer auf einem CMOS-Array basierenden Kamera, oder mit einem Pixelarraysensor und mit einer Bildverarbeitungseinheit ausgeführt. Der Lasertracker und die Kamera sind dabei insbesondere derart aufeinander montiert, dass ihre Positionen relativ zueinander nicht veränderbar sind. Die Kamera ist beispielsweise zusammen mit dem Lasertracker um dessen im Wesentlichen senkrechte Achse drehbar, jedoch unabhängig vom Lasertracker auf und ab schwenkbar und somit insbesondere von der Optik des Laserstrahls getrennt angeordnet. Insbesondere kann die Kamera über eine Fischaugenoptik verfügen und somit ein Schwenken der Kamera aufgrund eines sehr grossen Bilderfassungsbereichs der Kamera vermieden oder zumindest eingeschränkt nötig sein. Weiters kann die Kamera - zum Beispiel in Abhängigkeit von der jeweiligen Anwendung - um nur eine Achse schwenkbar ausgeführt sein. Ebenso kann die Kamera in integrierter Bauweise mit der Laseroptik zusammen in einem gemeinsamen Gehäuse verbaut sein.

Mit dem Erfassen und Auswerten eines Bildes - mittels Bilderfassungs- und Bildverarbeitungseinheit - eines sogenannten Messhilfsinstruments mit Markierungen, deren relative Lage zueinander bekannt ist, kann so auf eine Orientierung eines an dem Messhilfsinstrument angeordneten Objekts (beispielsweise eine Sonde) im Raum geschlossen werden. Zusammen mit der bestimmten räumlichen Position des Zielpunkts kann ferner die Position und Orientierung des Objekts im Raum absolut und/oder relativ zum Lasertracker präzise bestimmt werden.

Das Objekt, dessen Position und Orientierung mit dem genannten Messgerät vermessen wird, muss damit nicht das Objekt selbst, sondern kann das Messhilfsinstrument sein. Dieses wird als Teil des Messsystems für die Vermessung in eine relativ zum Zielobjekt mechanisch definierte oder während der Vermessung bestimmbare Position gebracht, wobei über dessen vermessene Position und Orientierung auf die Position und gegebenenfalls die Orientierung des Objekts - beispielsweise einer Messsonde - geschlossen werden kann.

Derartige Messhilfsinstrumente können durch so genannte Tastwerkzeuge, die mit ihrem Kontaktpunkt auf einem Punkt des Zielobjektes positioniert werden, verkörpert sein. Das Tastwerkzeug weist Markierungen, zum Beispiel Lichtpunkte, und einen Reflektor auf, der einen Zielpunkt am Tastwerkzeug repräsentiert und mit dem Laserstrahl des Lasertrackers anzielbar ist, wobei die Positionen der Markierungen und des Reflektors relativ zum Kontaktpunkt des Tastwerkzeuges präzise bekannt sind. Das Messhilfsinstrument kann auch ein beispielsweise von Hand gehaltener zur Distanzmessung ausgerüsteter Scanner für berührungslose Oberflächenvermessungen sein, wobei Richtung und Position des für die Distanzmessung verwendeten Scanner-Messstrahles relativ zu den Lichtpunkten und Reflektoren, die auf dem Scanner angeordnet sind, genau bekannt sind. Ein derartiger Scanner ist beispielsweise in der EP 0 553 266 A1 beschrieben.

Für das Bestimmen der Orientierung des Messhilfsinstruments wird eine Erfassungsrichtung der Kamera fortlaufend so ausgerichtet, dass ein Bild in Richtung des Tracking-Strahls des Lasertrackers erfassbar ist.

Die Kamera kann des weiteren über eine Zoomfunktion verfügen, wobei eine Vergrösserungsstufe in Abhängigkeit der bestimmten Distanz zwischen Lasertracker und Zielpunkt bzw. Messhilfsinstrument eingestellt werden kann (Vario-Kamera). Mit diesen beiden Anpassungsfunktionen (Ausrichtung und Vergrösserung) kann die Kamera somit fortlaufend ein Bild erfassen, in dem das Messhilfsinstrument und ins besondere die Lichtpunkte des Messhilfsinstruments abgebildet sind. Dadurch entsteht ein elektronisch auswertbares zweidimensionales Bild einer räumlichen Anordnung von Lichtpunkten.

Ein derartiges Messgerät mit einem Lasertracker und einer Bilderfassungseinheit für die Bestimmung von Position und Orientierung von Objekten im Raum, an denen Lichtpunkte und Reflektoren angeordnet sind, ist beispielsweise in der US 5,973,788 beschrieben.

In der EP 1 510 846 A1 wird ein Führungssystem für Zoom-Systeme geoffenbart, mit dem optische Baugruppen, wie Linsen oder Linsengruppen, entlang der optischen Achse des Zoom-Systems zu verschieben sind. Dabei weist ein Wagen, der zur Aufnahme einer optischen Baugruppe, insbesondere eine Linse oder Linsengruppe, ausgebildet ist, an seiner Aussenseite mehrere Auflageflächen zur Auflage am Innendurchmesser eines Objektivs auf. Für eine definierte Bewegung des Wagens ist als Antriebseinheit eine Spindelkurve vorgesehen. Da keine direkte Rückmeldung der tatsächlichen linearen Position erfolgt, sondern nur über ein Zählen von Schritten des Motors ableitbar ist, kann es bedingt durch den Alterungsprozess des Motors zu Ungenauigkeiten kommen, wenn sich durch Abnutzung ein Motorschritt - auch minimal - vergrössert oder verringert. Ebenso ist es möglich, dass - beispielsweise durch eine Erschütterung des Gerätes - ein Schritt ausgeführt wird, der nicht gezählt wird. Dies kann dazu führen, dass sich ein Wagen an einer anderen Position befindet, als durch das System angenommen, was einerseits unscharfe Bilder und Messfehler und andererseits auch eine Beschädigung des Gerätes verursachen kann.

In der US 2002/0093745 A1 wird die lineare Bewegung des Wagens durch einen Photodetektor gemessen, der die Drehung eines reflektierenden Bandes, das auf dem Nockenrad angeordnet ist, erfasst.

Eine Aufgabe der vorliegenden Erfindung besteht darin, für eine Kamera mit einem Zoomobjektiv ein verbessertes Führungssystem bereitzustellen, das eine erhöhte Genauigkeit bei der linearen Positionierung der Wagen aufweist. Eine besondere Aufgabe der vorliegenden Erfindung besteht darin, ein solches Führungssystem mit einem verbesserten, insbesondere exakteren, Positionsfeedback bereitzustellen. Eine weitere Aufgabe liegt darin, ein solches Führungssystem für eine Kamera eines Lasertrackers bereitzustellen. Mindestens eine dieser Aufgaben wird in erfindungsgemässer Weise durch das Kamerasystem mit den Merkmalen des Anspruchs 1 und/oder der weiteren Ansprüche gelöst. Vorteilhafte Ausgestaltungen der Erfindung finden sich in den abhängigen Ansprüchen.

Ein erfindungsgemässes Kamerasystem weist ein Zoomobjektiv mit einem Objektivsystem sowie einem dem Objektivsystem nachgeordneten Kamerasensor, insbesondere einem CMOS-Sensor, auf. Das Objektivsystem beinhaltet eine oder mehrere feste optische Baugruppen und eine oder mehrere bewegliche Zoom-Optikbaugruppen. Vorzugsweise hat das Objektivsystem zwei feste und zwei bewegliche optische Baugruppen, wobei sich die beiden beweglichen zwischen den beiden festen Baugruppen befinden.

Die beweglichen Zoom-Optikbaugruppen sind jeweils spielfrei von einem Optikträger getragen. Optikträger und optische Baugruppen bilden dabei jeweils eine Baueinheit in Form eines Wagens, wobei die Wagen jeweils einen im Wesentlichen kreisrunden Querschnitt aufweisen.

Die Wagen werden in einem Objektivtubus geführt, wobei insbesondere Kugelkäfige oder Gleitelemente die Auflage- bzw. Berührungspunkte mit dem Objektivtubus bilden und somit die axiale Beweglichkeit der Wagen bzw. der von diesen getragenen Zoom-Optikbaugruppen bereitstellen. Im Falle der Führung durch Gleitelemente gewährleisten dabei mittels eines Vorspannelementes vorgespannte Gleitelemente an der Oberseite der Wagen, dass eingeschraubte und justiergedrehte Gleitelemente im Wesentlichen ohne Spiel an der Innenmantelfläche des Objektivtubus gehalten werden.

Unter einem Objektivtubus ist im Sinne der vorliegenden Erfindung nicht nur ein seitlich geschlossener Hohlzylinder zu verstehen. Vielmehr soll der Begriff im Sinne der Erfindung funktional im Sinne eines tubusartigen Führungssystems, das eine Führung der Wagen entlang der optischen Achse gewährleistet, verstanden werden. Insbesondere kann der Objektivtubus im Querschnitt ausser einer runden auch eine ellipsoide oder polygonale Form aufweisen. Ebenso kann der Objektivtubus Öffnungen, insbesondere in Form von Längsschlitzen, aufweisen, oder aus einzelnen in Richtung der optischen Achse angeordneten Längssegmenten bestehen, die durch ihre Anordnung im Wesentlichen die Form eines Hohlzylinders umschreiben.

Die Wagen sind mittels jeweils einer vom Führungssystem des Objektivtubus entkoppelten Antriebseinheit entlang der optischen Achse bewegbar. Die Antriebseinheiten weisen Motoren und bewegungsübertragende Elemente auf, wobei die Wagen jeweils mittels eines Mitnehmers an die Bewegungen der bewegungsübertragenden Elemente gekoppelt sind. Die an den Wagen befestigten Mitnehmer gewährleisten im Zusammenhang mit zur Führung dieser Mitnehmer im Tubus vorgesehenen Führungslängsschlitzen eine Sicherung für die Wagen gegen eine rollende Verdrehung innerhalb der Tubusführung.

Die Mitnehmer sind vorzugsweise als Teil des Wagens ausgeführt, das heisst beispielsweise fest am Optikträger angebracht, insbesondere angeschraubt, oder als ein gemeinsames Bauteil mit dem Optikträger ausgeführt. Der Mitnehmer ist dann beweglich, insbesondere mittels eines Kugelgelenks, am bewegungsübertragenden Element der Antriebseinheit angeordnet. Alternativ kann der Mitnehmer auch fest am bewegungsübertragenden Element und beweglich am Wagen angeordnet sein. Der Mitnehmer wird - vorzugsweise mit einem Gleitelement versehen - in einem Längsschlitz des Objektivtubus geführt und verhindert so ein Verdrehen des Wagens in einer zur optischen Achse parallelen Ebene. Alternativ kann der Mitnehmer mittels eines oder zweier Magneten mit dem Wagen in Wirkverbindung stehen, sodass an dieser Stelle keine Öffnung für den Mitnehmer im Tubuskörper vonnöten ist.

Als Motoren sind diverse Varianten denkbar, es kommen insbesondere Gleichstrom-Motoren oder lineare Piezo-Motoren in Frage. Das bewegungsübertragende Element kann beispielsweise an einem Riemen, insbesondere einem Zahnriemen oder einem Flachriemen, der von einem Gleichstrom-Motor antreibbar ist, befestigt sein, oder als durch einen Piezo-Motor bewegbare Keramikstange ausgeführt sein.

Erfindungsgemäss weist jeder Wagen ein Positionsgeberelement auf, das insbesondere einen optisch oder kapazitiv erfassbaren Positionscode enthält. Das Positionsgeberelement kann vorzugsweise auf dem Optikträger angeordnet sein, insbesondere in Form eines aufgekitteten Glasmassstabes.

Des weiteren ist ein Abtastsensor vorgesehen, der vorzugsweise ausserhalb des Tubusinnenraumes auf dem Tubuskörper bzw. innerhalb des Tubuskörpers angeordnet ist. Der Abtastsensor ist insbesondere derart gestaltet, dass er das Positionsgeberelement bzw. den Positionscode des Positionsgeberelementes erfassen und davon abgeleitet ein Abtastsignal erzeugen kann, aus welchem eine lineare Position des Wagens ableitbar ist. Ist der Abtastsensor auf dem Tubuskörper angeordnet, weist der Tubuskörper eine zum Abtasten des Codeelementes geeignete Öffnung auf, in oder über der der Abtastsensor angeordnet wird, und die insbesondere vollständig vom Abtastmodul bedeckt sein kann. Als Linearencoder mit Glasmassstab kann zum Beispiel ein Encoder vom Typ "Mercury 1500P" des Herstellers MicroE System eingesetzt werden. Der Abtastsensor ist vorteilhaft in einem Abstand von zwei bis drei Millimeter, insbesondere 2,25 bis 2,55 mm, zum Glasmassstab angeordnet.

Ebenso kann das Positionsgeberelement auf dem Mitnehmer angeordnet sein, wenn dieser als Teil des Wagens ausgestaltet ist oder fest an diesem montiert, insbesondere festgeschraubt ist. Der Abtastsensor ist in diesem Fall derart angeordnet, insbesondere ausserhalb des Objektivtubus, dass er den Positionscode auf dem Mitnehmer erfassen kann. Alternativ kann der Mitnehmer auch selbst als Positionsgeberelement ausgestaltet sein. Beispielsweise kann durch drei Lichtquellen Licht in Richtung eines lichtempfindlichen Abtastsensors emittiert werden, wobei durch den Mitnehmer Schatten auf dem Abtastsensor erzeugt werden, aus deren Position eine lineare Position des Mitnehmers und damit des Wagens ableitbar ist.

Jedes Positionsgeberelement ist in einer unveränderlichen räumlichen Beziehung zur Optikbaugruppe desselben Wagens angeordnet, insbesondere dadurch, dass alle Komponenten eines Wagens, bzw. mindestens die Optikbaugruppe und die das Positionsgeberelement tragende Komponente, spielfrei miteinander verbunden sind. Dadurch ist es möglich, aus dem vom Abtastsensor erzeugten Signal direkt eine Veränderung der Position der Optikbaugruppe abzuleiten. Ist die räumliche Beziehung ausserdem bekannt, kann auch eine eindeutige aktuelle Position der Optikbaugruppe abgeleitet werden.

Die Optikträger der Wagen können, wie in der EP 1 510 846 A1 beschrieben, mehrere Hülsensegmente aufweisen, die vorzugsweise einen Kreisbogen von 120° oder 90° beschreiben, und an denen Gleitelemente angeordnet sind. Dies erlaubt zum einen eine grosse Führungslänge in Richtung der optischen Achse und ermöglicht zum anderen durch ein Ineinanderschieben der Hülsensegmente benachbarter Wagen eine stärkere Annäherung der optischen Baugruppen der Wagen aneinander.

Optikträger und Objektivtubus sind vorzugsweise aus Aluminium gefertigt. Optikträger und Mitnehmer können dabei beispielsweise als ein gemeinsames Bauteil ausgestaltet sein, insbesondere durch Aluminiumguss, ansonsten kann der Mitnehmer bevorzugt aus einer Stahllegierung gefertigt sein. Der Objektivtubus kann Öffnungen für Justier- und Wartungsarbeiten aufweisen. Die Wand des Tubusinnenraumes ist zur Verbesserung der Führung der Wagen vorzugsweise oberflächenbeschichtet. Die justiergedrehten Gleitelemente bestehen vorzugsweise aus einer Stahl- oder Kupferlegierung, insbesondere aus Stahl oder Bronze.

Vorzugsweise kann für einen Dunkelabgleich eine motorgetriebene einschwenkbare Shutter-Blende vorgesehen sein.

Insbesondere ist das Führungssystem zur Verwendung in einer Vario-Kamera, insbesondere als Teil eines Lasertrackers, geeignet. Unter Vario-Kamera wird dabei eine Kamera verstanden, die über eine Zoomfunktion verfügt, bei welcher eine Vergrösserungsstufe in Abhängigkeit von einer bestimmten Distanz zwischen Kamera und Ziel eingestellt werden kann, insbesondere sodass das Ziel unabhängig von seiner Entfernung stets in derselben Grösse abbildbar ist.

Das erfindungsgemässe Kamerasystem wird im Folgenden anhand von schematisch dargestellten Ausführungen beschrieben. Weitere Vorteile und Kennzeichen der Erfindung sind aus der folgenden Beschreibung von derzeit bevorzugten Ausführungsformen im Zusammenhang mit den anhängenden Figuren ersichtlich. In den Figuren zeigen schematisch:
- Fig. 1a-c: ein erfindungsgemässes Kamerasystem in einer Seitenansicht von zwei Seiten;
- Fig. 2a-c: einen erste Ausführungsform eines Wagens in einer Seitenansicht und in einem Querschnitt;
- Fig. 3: eine zweite Ausführungsform eines Wagens in einer Seitenansicht;
- Fig. 4: einen Querschnitt durch einen Objektivtubus und zwei Antriebseinheiten;
- Fig. 5a-c: eine erste Ausführungsform des Mitnehmers;
- Fig. 6: eine zweite Ausführungsform des Mitnehmers;
- Fig. 7a-b: eine alternative Ausführungsform des Encoders mit einem Mitnehmer als Positionsgeberelement;
- Fig. 8: einen Längsschnitt durch ein erfindungsgemässes Kamerasystem;
- Fig. 9a-b: einen Längsschnitt durch den Objektivtubus eines erfindungsgemässen Kamerasystems mit freigelegten Wagen und optischen Baugruppen; und
- Fig. 10: zwei Ausführungsformen eines Lasertrackers mit einem erfindungsgemässen Kamerasystem.

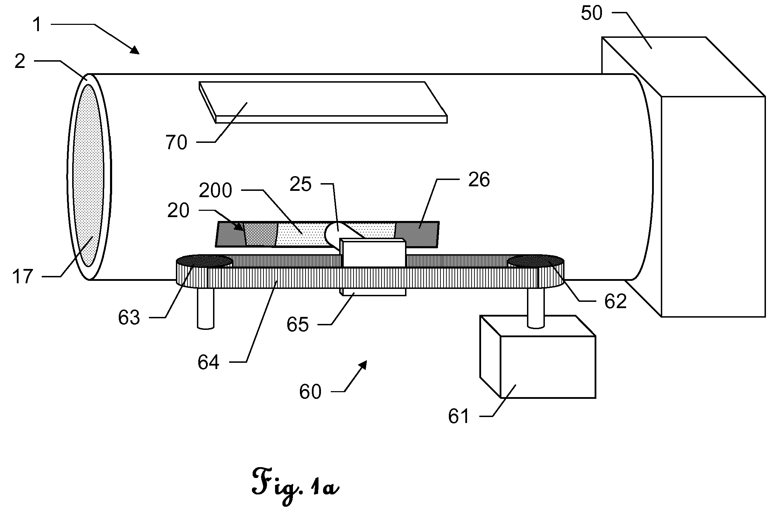

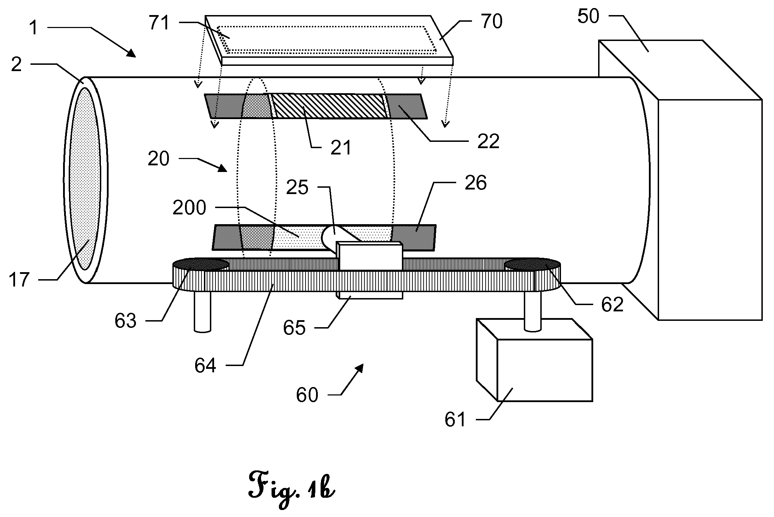

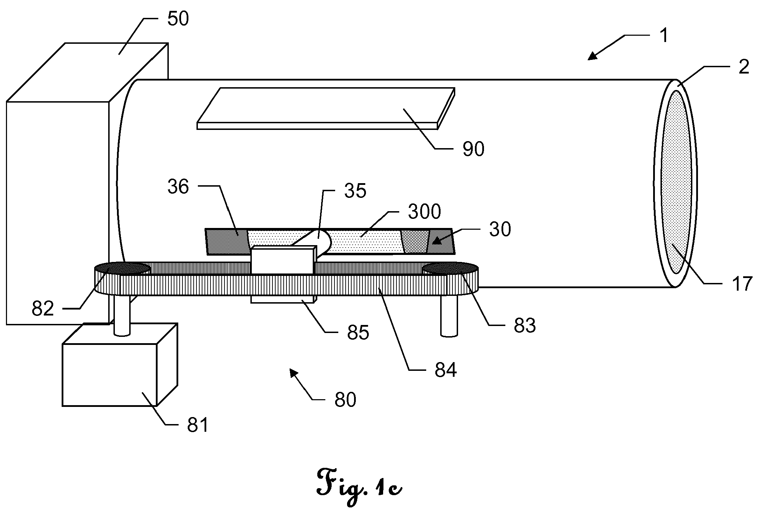

Die Figuren 1a bis 1c zeigen ein erfindungsgemässes Kamerasystem 1. Dabei zeigen die Figuren 1a und 1b das Kamerasystem 1 in einer ersten Seitenansicht und Figur 1c dasselbe Kamerasystem 1 in einer Ansicht von der Gegenseite.

Das in Figur 1a dargestellte erfindungsgemässe Kamerasystem 1 beinhaltet einen Objektivtubus, der einen Tubuskörper 2 aufweist und der an einem Ende mit einem optischen Element 17 in Form einer Linse und am anderen Ende von einem Sensorelement 50 begrenzt wird. Auf der Aussenseite kann der Tubuskörper 2 - wie hier beispielhaft dargestellt - die Form eines Zylinders einnehmen, aber ebenso als quaderförmiger Block oder anderweitig geformt sein. Der - hier nicht dargestellte - durch den Tubuskörper 2 definierte Innenraum des Objektivtubus (Tubusinnenraum) weist jedoch vorteilhaft eine im Wesentlichen zylindrische Form auf.

Im Tubusinnenraum ist ein erster Wagen 20 linear beweglich angebracht. Der Wagen 20 weist eine optische Baugruppe und einen Optikträger 200 auf und ist vermittels einer Antriebseinheit 60 entlang der Längsachse des Objektivtubus bewegbar. Die Antriebseinheit 60 weist einen Motor 61, insbesondere in Form eines Gleichstrom-Getriebemotors, eine vorspannbare Umlenkrolle 62, eine weitere Umlenkrolle 63, sowie einen über die Umlenkrollen 62,63 gespannten Zahnriemen 64 auf.

Am Zahnriemen 64 ist ein bewegungsübertragendes Element 65 befestigt, beispielsweise aufgeklemmt, das über einen Mitnehmer 25 die Bewegung auf den Wagen 20 überträgt. Zur Führung des Mitnehmers 25 weist der Tubuskörper 2 einen länglichen Schlitz 26 auf. Zum besseren Gleiten in diesem Führungslängsschlitz 26 kann der Mitnehmer 25 über Gleitelemente verfügen (nicht dargestellt).

Auf dem Tubuskörper 2 ist ein Abtastmodul 70 zum Erfassen eines Positionscodes und Ableiten einer Position des Wagens 20 angeordnet.

In Figur 1b ist dieses Abtastmodul 70 der Anschaulichkeit halber vom Tubuskörper 2 abmontiert dargestellt. Unter dem Abtastmodul 70 ist so eine weitere Öffnung 22 im Tubuskörper 2 zu erkennen. Auf dem Wagen 20, dessen Umrisse hinter der Wand des Tubuskörper 2 mittels gepunkteter Linien dargestellt sind, befindet sich in Höhe der Öffnung 22 ein Positionsgeberelement 21, beispielsweise in Form eines Glasmassstabes, das einen Positionscode trägt, der von einem Abtastsensor 71 des Abtastmoduls 70 erfassbar ist, und aus welchem eine lineare Position des Wagens 20 ableitbar ist.

Figur 1c zeigt das Kamerasystem 1 von der gegenüberliegenden Seite, sodass ein zweiter Wagen 30 im Tubusinnenraum sichtbar wird. Dieser wird von einem zweiten Antriebssystem 80 angetrieben, das eine vorspannbare Umlenkrolle 82, eine weitere Umlenkrolle 83, einen Zahnriemen 84 und ein bewegungsübertragendes Element 85 aufweist. Das bewegungsübertragende Element 85 überträgt über einen Mitnehmer 35 die Bewegung auf den Wagen 30, wobei auch auf dieser Seite der Tubuskörper 2 einen Führungslängsschlitz 36 für den Mitnehmer 35 aufweist. Auf dem Tubuskörper 2 ist ein zweites Abtastmodul 90 zum Erfassen eines Positionscodes und Ableiten einer Position des zweiten Wagens 30 angeordnet.

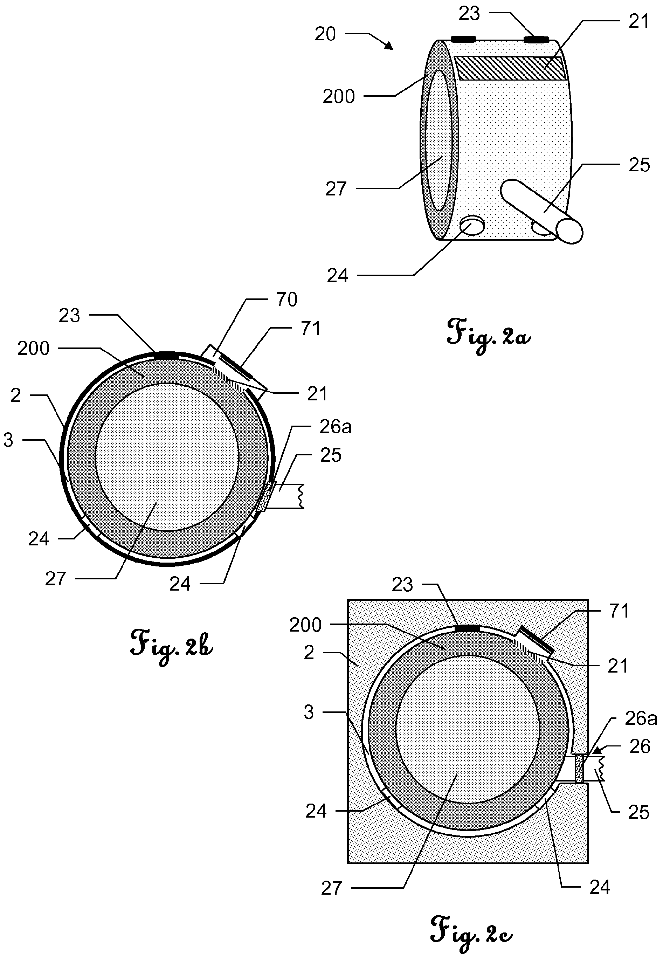

Die Figuren 2a-c zeigen am Beispiel des ersten Wagens 20 aus den Figuren 1a-c beispielhaft den Aufbau eines erfindungsgemässen Wagens. Ein erfindungsgemässer Wagen bildet eine Baueinheit mehrerer fest miteinander verbundener Bauteile.

Figur 2a ist eine Seitenansicht des Wagens 20. Dargestellt ist ein optisches Element 27 als Teil der optischen Baugruppe des Wagens in Form einer Linse. Der die optische Baugruppe umgebende Optikträger 200 ist vorzugsweise aus Aluminium gefertigt. Auf dem Optikträger 200 ist ein Positionsgeberelement 21 angeordnet, das einen Positionscode trägt, welcher von einem Abtastsensor erfassbar ist, und aus welchem eine lineare Position des Wagens 20 ableitbar ist. Das Positionsgeberelement 21 ist insbesondere ein Glasmassstab und auf den Optikträger 200 aufgekittet. Ein Mitnehmer 25 ist fest mit dem Optikträger 200 verbunden, beispielsweise mit diesem verschraubt oder als ein gemeinsames Bauteil ausgeführt, und stellt eine Verbindung zu einem bewegungstragenden Element einer Antriebseinheit dar (hier nicht dargestellt). Auf dem Optikträger 200 sind zwei Arten Gleitelemente 23,24 angeordnet: zwei vorspannbare Gleitelemente 23 und mehrere justiergedrehte Gleitelemente 24; letztere bestehen insbesondere aus Stahl oder Bronze.

Figur 2b stellt einen Querschnitt durch denselben Wagen 20 aus Figur 2a dar, der in einem Objektivtubus angeordnet ist. Ein Paar vorspannbare Gleitelemente 23 und zwei Paar justiergedrehte Gleitelemente 24 gewährleisten in einer zur optischen Achse senkrechten Ebene eine spielfreie gleitgeführte Lagerung des Wagens 20 am Tubusinnenraum 3. Der Tubuskörper 2 ist aus Aluminium gefertigt, die Wand des Tubusinnenraumes 3 ist zur Verbesserung der Führung der Wagen oberflächenbeschichtet.

Auf dem Tubuskörper 2 ist ein Abtastmodul 70 mit einem Abtastsensor 71 angeordnet. Der Abtastsensor 71 ist dazu ausgestaltet, den Positionscode des auf dem Optikträger 200 angeordneten Positionsgeberelementes 21 zu erfassen, sodass ein positionsabhängiges Abtastsignal, das mit der linearen Position des ersten Wagens 20 verknüpft ist, erzeugbar ist und eine lineare Position des ersten Wagens 20 ableitbar ist.

In Figur 2c ist der Wagen 20 aus den Figuren 2a und 2b in einem alternativen Tubuskörper 2 dargestellt. Während der Tubusinnenraum 3 wiederum einen kreisrunden Querschnitt aufweist und zylinderförmig ist, weist der Tubuskörper 2 einen quadratischen Querschnitt auf und ist quaderförmig. Der Abtastsensor 71 ist in dieser Ausführungsform in den Tubuskörper 2 integriert. Ausserdem ist der Mitnehmer 25 mit einem Gleitelement 26a zum linearen Gleiten im Führungslängsschlitz 26 dargestellt.

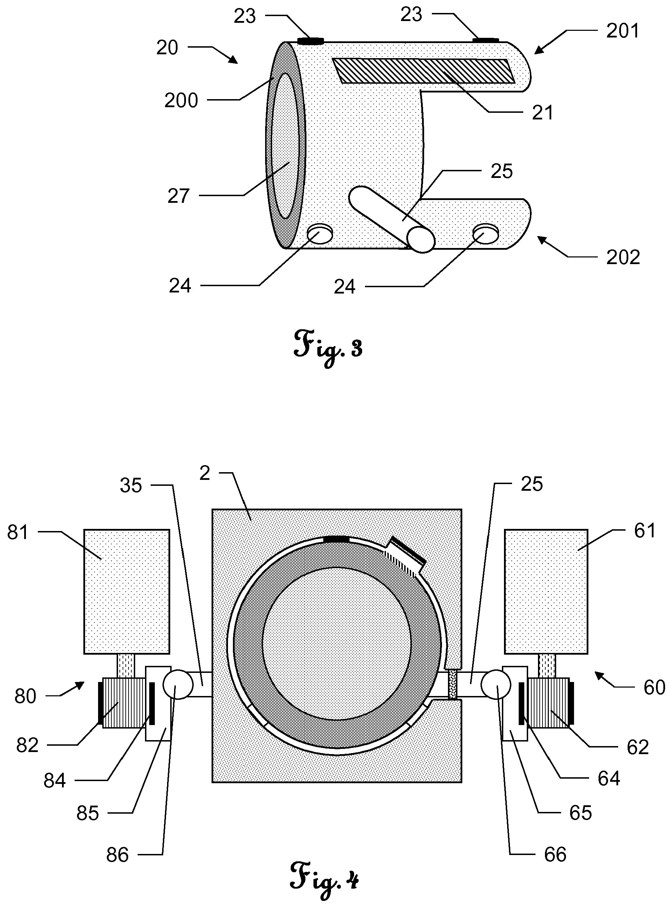

In Figur 3 ist eine alternative Ausführungsform des Wagens 20 dargestellt. Der Optikträger 200 des Wagens 20 weist dabei einseitig mehrere Segmente 201,202 auf. Diese weisen jeweils ein Gleitelement 23,24 auf. Das Positionsgeberelement 21 ist teilweise auf dem oberen Segment 201 angeordnet.

Durch die Segmente 201,202 des Optikträgers 200 wird die Führungslänge des Wagens 20 vergrössert. Werden bei einem rechts von dem dargestellten Wagen 20 angeordneten (hier nicht dargestellten) zweiten Wagen zwei Segmente derart versetzt angeordnet, dass sie bei einer Annäherung der beiden Wagen in die Zwischenräume zwischen den Segmenten 201,202 greifen, so wird das Vergrössern der Führungslänge mit einem gleichbleibendem Minimalabstand zwischen den beiden Wagen ermöglicht. Die Zahl der Segmente ist nicht auf zwei beschränkt. Es sind auch Ausführungsformen mit einem Segment pro Wagen, oder mit drei oder mehr Segmenten möglich.

Figur 4 zeigt den Querschnitt durch den Objektivtubus aus Figur 2c mit zwei seitlich angeordneten Antriebseinheiten 60,80. Die beiden Antriebseinheiten 60,80 weisen jeweils einen Motor 61,81, eine von diesem antreibbare, vorspannbare Umlenkrolle 62,82, einen um diese und eine weitere (hier nicht dargestellte) Umlenkrolle gespannten Zahnriemen 64,84 und ein an diesen angeklemmtes bewegungsübertragendes Element 65,85 auf. An den bewegungsübertragenden Elementen 65,85 ist jeweils über ein Kugelgelenk 66,86 ein Mitnehmer 25,35 als Teil eines Wagens angebracht.

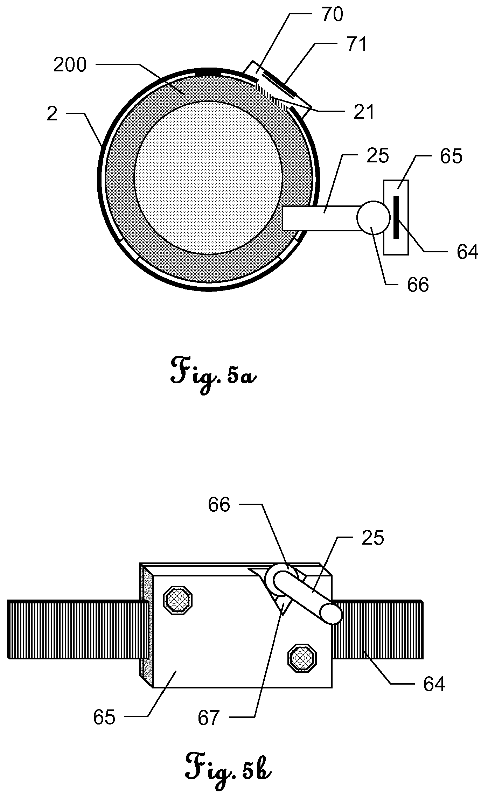

In den Figuren 5a-c ist in einem Querschnitt des Wagens 20 aus Figur 2b eine erste Ausführungsform des Mitnehmers 25 und dessen Aufhängung am bewegungsübertragenden Element 65 dargestellt.

Figur 5a zeigt eine erste Ausführungsform des Mitnehmers 25. In dieser ist er als Teil des Wagens 20 ausgestaltet. Dazu ist er fest mit dem Optikträger 200 verbunden, insbesondere in den Optikträger 200 eingeschraubt oder durch Aluminiumguss als ein gemeinsames Teil mit dem Optikhalter gefertigt. Mit dem am Zahnriemen 64 befestigten bewegungsübertragenden Element 65 ist der Mitnehmer 25 über ein Kugelgelenk 66 verbunden.

Figur 5b zeigt eine beispielhafte Befestigung der ersten Ausführungsform des Mitnehmers 25 am bewegungsübertragenden Element 65. Das bewegungsübertragende Element 65 ist auf den Zahnriemen 64 aufgeklemmt und weist ein V-förmiges Lager 67 auf, in dem das am Mitnehmer 25 befestigte Kugelgelenk 66 positionstreu fixiert ist.

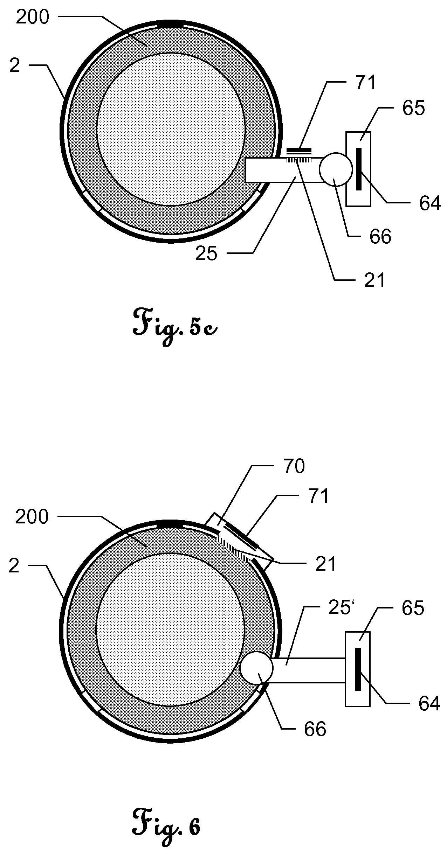

Figur 5c zeigt eine Variante der ersten Ausführungsform des Mitnehmers 25. In dieser ist das Positionsgeberelement 21 auf dem Mitnehmer 25 angeordnet und der Abtastsensor 71 in entsprechender Position. Weil der Mitnehmer 25 als Teil des Wagens 25 ausgeführt ist und spielfrei mit dem Optikträger 200 verbunden ist, kann aus einer linearen Position des Mitnehmers 25 eine lineare Position des Wagens 20 abgeleitet werden.

Figur 6 zeigt eine zweite Ausführungsform des Mitnehmers 25'. In dieser ist der Mitnehmer 25' fest mit dem bewegungsübertragenden Element 65 verbunden, insbesondere geschraubt oder aus einem Stück gefertigt. Mit dem Wagen 20 ist der Mitnehmer 25' über ein Kugelgelenk 66 verbunden.

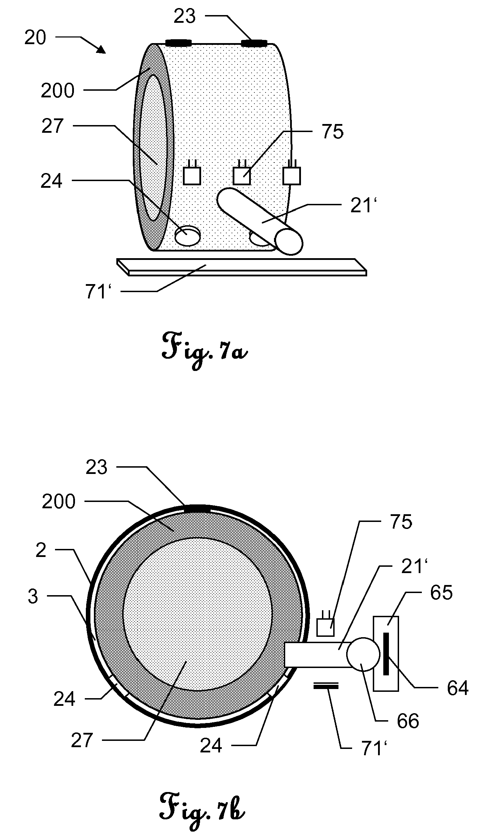

Eine weitere Variante des Mitnehmers ist in den Figuren 7a und 7b dargestellt. Dabei fungiert der spielfrei mit dem Optikträger 200 verbundene Mitnehmer als Positionsgeberelement 21'. Entlang der Richtung der Verschiebbarkeit des Wagens 20 sind oberhalb des Positionsgeberelementes 21' drei Lichtquellen 75 angeordnet und diesen gegenüber ein lichtempfindlicher Abtastsensor 71'. Die drei Lichtquellen 75 emittieren Licht auf den Abtastsensor 71', wobei der Mitnehmer als Positionsgeberelement 21' drei Schatten auf den Abtastsensor 71' wirft, die durch diesen erfassbar sind. Aus der Position der drei Schatten kann auf eine Position des Positionsgeberelementes 21' abgeleitet werden, und damit eine Position des Wagens 20.

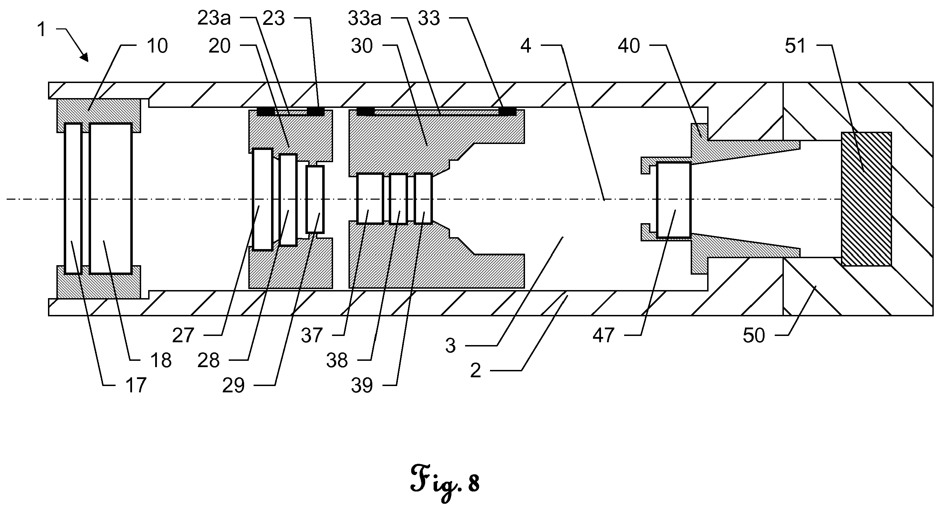

Figur 8 zeigt einen Längsschnitt durch ein erfindungsgemässes Kamerasystem 1. Der Tubuskörper 2 definiert einen Tubusinnenraum 3 und eine optische Achse 4. Am Ende des Objektivtubus ist ein Sensormodul 50 mit einem optischen Sensor 51 zum Empfang optischer Strahlung angeordnet.

Im Tubusinnenraum 3 sind entlang der optischen Achse 4 rein beispielhaft feste und bewegliche optische Baugruppen angeordnet. Am vorderen Ende des Objektivtubus ist eine erste feste optische Baugruppe 10 mit zwei optischen Elementen 17,18 mit dem Tubuskörper 2 verbunden, am hinteren Ende des Objektivtubus ist eine zweite feste optische Baugruppe 40 mit eine optischen Element 41 angebracht. Die beiden festen optischen Baugruppen 10,40 sind vorzugsweise justierbar.

Zwischen den beiden festen optischen Baugruppen 10,40 sind zwei Wagen 20,30 mittels Gleitelementen 23,33 entlang der optischen Achse 4 beweglich gelagert. Der erste Wagen 20 und der zweite Wagen 30 weisen jeweils eine in einem Optikträger 200 angeordnete Optikgruppe mit drei optischen Elementen 27-29,37-39 auf. Jeweils zwei Gleitelemente 23,33 sind mittels eines am Optikträger 200 angeordneten Vorspannelementes 23a,33a vorspannbar. Die optischen Elemente sind rein symbolisch dargestellt und können verschiedene dem Fachmann bekannte Formen aufweisen.

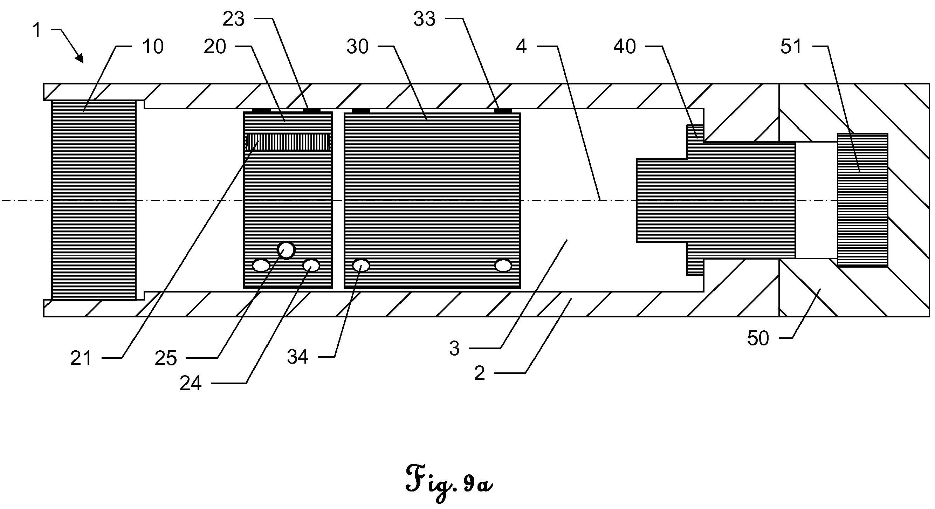

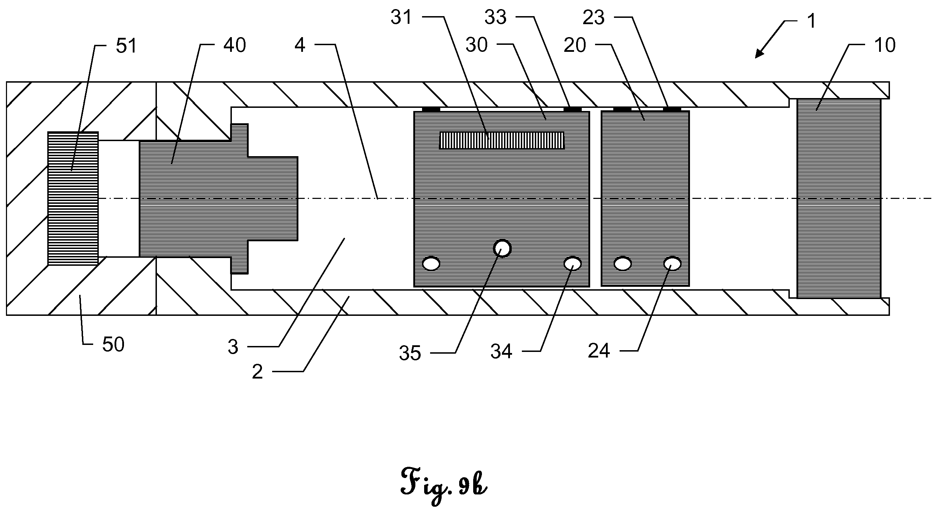

In den Figuren 9a und 9b ist ein Längsschnitt durch den Tubuskörper 2 dargestellt, wobei die im Tubusinnenraum 3 angeordneten Wagen 20,30 und festen optischen Baugruppen 10,40 von zwei Seiten jeweils in einer Seitenansicht dargestellt sind. Die Wagen 20,30 weisen am Optikträger 200 jeweils ein Positionsgeberelement 21,31 auf, einen Mitnehmer 25,35, sowie ein Paar vorspannbare Gleitelemente 23,33 und zwei Paar justiergedrehte Gleitelemente 24,34.

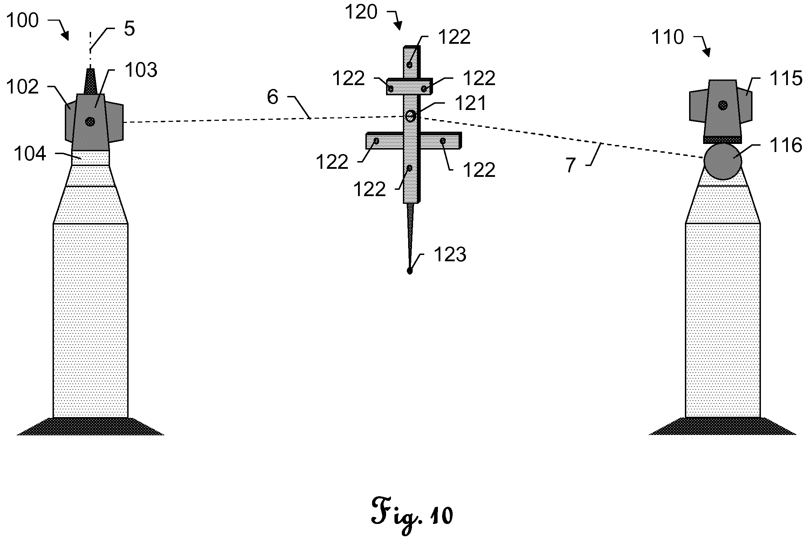

Figur 10 zeigt als Beispiel für die Anwendung eines erfindungsgemässen Kamerasystems zwei verschiedene Ausführungsformen eines Lasertrackers 100,110. Ausserdem ist ein Messhilfsinstrument 120 dargestellt, hier ausgestaltet als ein taktiles Messgerät.

Beide Lasertracker 100,110 weisen eine Bilderfassungseinrichtung auf, die insbesondere als erfindungsgemässes Kamerasystem ausgestaltet ist, bzw. ein erfindungsgemässes Kamerasystem aufweist.

Der erste Lasertracker 100 weist eine Basis 104 und eine Stütze 103 auf, wobei die Stütze 103 um eine durch die Basis 104 definierte Schwenkachse 5 relativ zur Basis 104 schwenkbar bzw. rotierbar angeordnet ist. Zudem ist eine Anzieleinheit 102 derart an der Stütze 103 angeordnet, dass die Anzieleinheit 102 relativ zur Stütze 103 um eine Neigungsachse (Transitachse) schwenkbar ist. Durch eine so um zwei Achsen bereitgestellte Ausrichtungsmöglichkeit der Anzieleinheit 102 kann ein von der Anzieleinheit 102 emittierter Laserstrahl 6 flexibel ausgerichtet und damit Ziele angezielt werden. Die Schwenkachse 5 und die Neigungsachse sind hierbei im Wesentlichen orthogonal zueinander angeordnet, das heisst geringe Abweichungen von einer exakten Achsenorthogonalität können vorbestimmt und im System, beispielsweise zur Kompensation von dadurch entstehenden Messfehlern, hinterlegt sein.

In der gezeigten Anordnung ist der Laserstrahl 6 auf einen Reflektor 121 am Messhilfsinstrument 120 gerichtet und wird an diesem zurück zum Lasertracker 100 retro-reflektiert. Mittels dieses Messlaserstrahls 6 kann eine Entfernung zum Reflektor 121, insbesondere mittels Laufzeitmessung, mittels des Phasenmessprinzips oder mittels des Fizeau-Prinzips, bestimmt werden. Der Lasertracker 100 verfügt über eine Feindistanzmesseinheit zur Bestimmung dieser Entfernung zwischen dem Tracker 100 und dem Reflektor 121 und über Winkelmesser, die eine Stellung der Anzieleinheit 102 erfassen, mittels derer der Laserstrahl 6 definiert ausgerichtet und geführt werden kann, und somit eine Ausbreitungsrichtung des Laserstrahls 6 bestimmbar machen.

Ausserdem weist der Lasertracker 100, insbesondere die Anzieleinheit 102, eine Bilderfassungseinheit zum Zweck einer Positionsbestimmung einer Sensorbelichtung auf einem Sensor bzw. in einem erfassten Bild einen CMOS auf oder ist insbesondere als CCD- oder Pixelsensorarray-Kamera ausgebildet. Derartige Sensoren erlauben eine positionssensitive Detektion von erfasster Belichtung auf dem Detektor. Weiters weist das Messhilfsinstrument 120 einen taktilen Sensor auf, dessen Kontaktpunkt 123 mit einem zu vermessenden Zielobjekt in Kontakt gebracht werden kann. Während dieser Kontakt zwischen dem Tastwerkzeug 120 und dem Zielobjekt besteht, können eine Position des Kontaktpunktes 123 im Raum und damit die Koordinaten eines Punkts am Zielobjekt exakt bestimmt werden. Dieses Bestimmen erfolgt vermittels einer definierten relativen Positionierung des Kontaktpunkts 123 zum Reflektor 121 und zu am Messhilfsinstrument 120 angeordneten Markierungen 122, die beispielsweise als Leuchtdioden ausgebildet sein können. Alternativ können die Markierungen 122 auch derart ausgebildet sein, dass diese bei einem Beleuchten, zum Beispiel mit Strahlung einer definierten Wellenlänge, die auftreffende Strahlung reflektieren (als Retroreflektoren ausgebildete Hilfspunkt-Markierungen 122), insbesondere eine bestimmte Leuchtcharakteristik zeigen, oder dass diese ein definiertes Muster oder Farbkodierung aufweisen. Aus der Lage bzw. Verteilung der Markierungen 122 in einem mit dem Sensor der Bilderfassungseinheit erfassten Bild kann somit eine Orientierung des Tastwerkzeugs 120 bestimmt werden.

Der zweite Lasertracker 110 weist eine von der Bilderfassungseinheit 115 separierte Strahlführungseinheit 116 zur Emission eines zweiten Laserstrahls 7 auf, welcher ebenfalls auf den Reflektor 121 ausgerichtet ist. Sowohl der Laserstrahl 7 als auch die Bilderfassungseinheit 115 sind jeweils um zwei Achsen motorisiert schwenkbar und können dadurch derart ausgerichtet werden, dass mittels der Bilderfassungseinheit 115 das mit dem Laserstrahl 117 angezielte Ziel 121 und die Markierungen 122 des Messhilfsinstruments 120 erfasst werden können. Somit können auch hier eine präzise Entfernung zum Reflektor 121 und eine Orientierung des Instruments 120 anhand der räumlichen Lage der Markierungen 122 bestimmt werden.

Zur jeweiligen Ausrichtung der Laserstrahlen 6,7 auf den Reflektor 121 sind an den Lasertrackern 100,110 jeweils Beleuchtungsmittel zur Beleuchtung des Reflektors 121 mit Strahlung einer bestimmten Wellenlänge, insbesondere im infraroten Wellenlängenbereich, vorgesehen und zusätzliche zumindest zwei Kameras mit positionssensitiven Detektoren an jedem Tracker 100,110 angeordnet. Die an dem Reflektor 121 reflektierte und zum Lasertracker 100,110 rückgestrahlte Beleuchtungsstrahlung kann mittels der Kameras detektiert und mit jedem der positionssensitiven Detektoren eine Position des Reflektors 121 auf dem jeweiligen Detektor abgebildet werden. Somit können sowohl mit dem ersten Lasertracker 100 als auch mit dem zweiten Lasertracker 110 zwei abgebildete Positionen des Reflektors bestimmt und in Abhängigkeit dieser abgebildete Zielpositionen das Ziel (Reflektor 121) aufgefunden - z.B. nach allgemein bekannten Prinzipien der Photogrammetrie - und die Anzieleinheit 102 bzw. die Strahlführungseinheit 116 derart ausgerichtet werden, dass das Ziel mit dem Messstrahl 6,7 angezielt wird.

Zudem kann auf Basis jeweils zweier Bilder eines Lasertrackers 100,110 jeweils eine Grobposition des Reflektors bestimmt werden. Diese Position kann nach allgemeinen geometrischen bzw. trigonometrischen Grundsätzen, beispielsweise nach geometrischen Konstruktionsprinzipien von Dreiecken oder mittels Sinus- und/oder Kosinussatz, bestimmt werden. Ausserdem können zu der Grobpositionsbestimmung allgemein bekannte Methoden der Photogrammetrie (Stereophotogrammetrie) eingesetzt werden. Hierfür sind zudem die relativen Positionen und insbesondere Ausrichtungen der Kameras am jeweiligen Tracker 100,110 zueinander bekannt.

Die Beleuchtungsmittel und die Kameras können in diesem Zusammenhang z.B. an der Bilderfassungseinheit 115, der Strahlführungseinheit 116, der Anzieleinheit 102, der Stütze 103 oder der Basis 104 in jeweils definierten Positionen angeordnet sein.

Mittels der Kenntnis der Positionierung der Kameras relativ zu einer Emissionsrichtung des jeweiligen Laserstrahls 6,7 kann der Laserstrahl 6,7 auf die ermittelte Grobposition des Reflektors 121 ausgerichtet und an diesen angekoppelt werden (lock-on). Dadurch kann trotz eines konstruktiv bedingten Versatzes der Lasermissionsrichtung zu den Erfassungsrichtungen der Kameras eine schnelle Ausrichtung des jeweiligen Strahls 6,7 erfolgen und eine durch die optischen Achsen der Kameras und den Laserstrahl 6,7 gegebene Parallaxe aufgelöst werden. Im Speziellen kann der Laserstrahl 6,7 direkt, das heisst ohne einen iterativen Zwischenschritt, auf das Ziel 121 ausgerichtet werden.

Insbesondere kann - alternativ oder zusätzlich zur Bestimmung der Grobposition des Reflektors 121 - aus den auf den Detektoren (an einem Lasertracker 100,110) erfassten und abgebildeten Zielpositionen eine Grobentfernung zum Reflektor 121 bestimmt werden. Auch diese Bestimmung kann mittels allgemein gültiger geometrischer Grundsätze erfolgen, z.B. mittels des Höhensatzes für Dreiecke und/oder mittels Sinus- und/oder Kosinussatz.

Es versteht sich, dass diese dargestellten Figuren nur mögliche Ausführungsbeispiele schematisch darstellen. Die verschiedenen Ansätze können ebenso miteinander wie auch mit Verfahren und Geräten des Stands der Technik kombiniert werden.

## Patentansprüche

1. Kamerasystem (1) mit einem Zoomobjektiv, insbesondere zur Verwendung in einem Vermessungsgerät, aufweisend
• ein tubusartiges Führungssystem mit einem einen Tubusinnenraum (3) und eine optische Achse (4) definierenden Tubuskörper (2),
• ein dem Führungssystem nachgeordnetes Sensormodul (50) mit einem optischen Sensor (51) zur Erfassung optischer Strahlung,
• mindestens einen ersten Wagen (20), der
▪ eine optische Baugruppe mit wenigstens einem optischen Element (27-29) und einen Optikträger (200) aufweist,
▪ im Tubusinnenraum (3) entlang der optischen Achse (4) linear beweglich angeordnet ist und
▪ in einer zur optischen Achse (4) senkrechten Ebene durch den Tubuskörper (2) im Wesentlichen spielfrei gelagert ist, und
• ein vom Führungssystem entkoppeltes erstes Antriebssystem (60) zur Bewegung des ersten Wagens (20) entlang der optischen Achse (4),
**dadurch gekennzeichnet, dass**
• der erste Wagen (20) ein erstes Positionsgeberelement (21, 21') aufweist, und
• ein erster Abtastsensor (71, 71') zum derartigen Erfassen des ersten Positionsgeberelementes (21, 21') ausgestaltet ist, dass ein positionsabhängiges erstes Abtastsignal, das mit der linearen Position des ersten Wagens (20) verknüpft ist, erzeugbar ist, sodass eine lineare Position des ersten Wagens (20) ableitbar ist.

2. Kamerasystem (1) nach Anspruch 1,
**dadurch gekennzeichnet, dass**
der Optikträger (200)
• kugelgelagert, insbesondere mittels eines Kugelkäfigs gelagert, ist oder
• zur spielfreien gleitgeführten Lagerung des ersten Wagens (20) mindestens zwei, insbesondere mindestens drei, Gleitelemente (23, 24) aufweist, insbesondere wobei der Optikträger (200) mindestens aufweist
▪ ein justiergedrehtes Gleitelement (24), insbesondere aus einer Stahl- oder Kupferlegierung, im Speziellen Stahl oder Bronze, und/oder
▪ ein mittels eines Vorspannelementes (23a) vorspannbares Gleitelement (23).

3. Kamerasystem (1) nach Anspruch 1 oder Anspruch 2,
**dadurch gekennzeichnet, dass**
das erste Positionsgeberelement (21)
• auf dem Optikträger (200) angeordnet ist, insbesondere wobei der erste Abtastsensor (71) zum Erfassen des ersten Positionsgeberelementes (21) an einer ersten Erfassungsöffnung (22) des Tubuskörpers (2) positioniert ist, und/oder
• als Glasmassstab ausgestaltet ist.

4. Kamerasystem (1) nach einem der vorangegangenen Ansprüche,
**gekennzeichnet durch**
mindestens eine feste optische Baugruppe (10, 40) mit jeweils wenigstens einem optischen
Element (17, 18, 47), die im Tubusinnenraum (3) entlang der optischen Achse (4) angeordnet ist, und die insbesondere justierbar ist.

5. Kamerasystem (1) nach Anspruch 4,
**dadurch gekennzeichnet, dass**
die mindestens eine feste optische Baugruppe (10, 40) ausgestaltet ist als
• eine erste feste optische Baugruppe (10) mit wenigstens einem optischen Element (17, 18), die am Eingang des Tubusinnenraumes (3) angebracht ist, und/oder
• eine zweite feste optische Baugruppe (40) mit wenigstens einem optischen Element (47), die am dem Sensormodul (50) zugewandten Ende des Tubusinnenraumes (3) angebracht ist.

6. Kamerasystem (1) nach einem der vorangegangenen Ansprüche,
**dadurch gekennzeichnet, dass**
das erste Antriebssystem (60) wenigstens aufweist
• einen ersten Motor (61), insbesondere ausgestaltet als Gleichstrom-Motor, und
• ein erstes bewegungsübertragendes Element (65), wobei
• ein erster Mitnehmer (25, 25') eine Verbindung zwischen dem ersten bewegungsübertragenden Element (65) und dem ersten Wagen (20) bildet, insbesondere sowohl an dem ersten bewegungsübertragenden Element (65) als auch am ersten Wagen (20) montiert ist, und
• der Tubuskörper (2) einen ersten Führungslängsschlitz (26) für den ersten Mitnehmer (25, 25'), insbesondere parallel zur optischen Achse (4), aufweist.

7. Kamerasystem (1) nach Anspruch 6,
**dadurch gekennzeichnet, dass**
das erste Antriebssystem (60) zusätzlich aufweist
• eine erste Umlenkrolle (62), die durch den ersten Motor (61) drehbar ist, und die insbesondere vorspannbar ist, und
• einen ersten Riemen (64), insbesondere ausgestaltet als Zahnriemen, der insbesondere durch eine Drehung der ersten Umlenkrolle (62) bewegbar ist,
wobei das erste bewegungsübertragende Element (65) am ersten Riemen (64) befestigt ist.

8. Kamerasystem (1) nach Anspruch 6 oder Anspruch 7,
**dadurch gekennzeichnet, dass**
der erste Mitnehmer (25) Teil des ersten Wagens (20) ist und spielfrei mit dem Optikträger (200) verbunden, insbesondere verschraubt, ist, insbesondere wobei der erste Mitnehmer (25)
• mit dem ersten bewegungsübertragenden Element (65) über ein erstes Kugelgelenk (66) verbunden ist,
• ein Gleitelement auf Höhe des ersten Führungslängsschlitz (26) aufweist, und/oder
• im Wesentlichen aus Aluminium oder aus einer Stahllegierung besteht.

9. Kamerasystem (1) nach Anspruch 8,
**dadurch gekennzeichnet, dass**
• das erste Positionsgeberelement (21) auf dem ersten Mitnehmer (25) angeordnet ist, oder
• der erste Mitnehmer (25) als erstes Positionsgeberelement (21') ausgestaltet ist.

10. Kamerasystem (1) nach Anspruch 6 oder Anspruch 7,
**dadurch gekennzeichnet, dass**
der erste Mitnehmer (25') mit dem ersten bewegungsübertragenden Element (65) spielfrei verbunden ist und
• mit dem ersten Wagen (20)
▪ über ein erstes Kugelgelenk (66) verbunden ist oder
▪ mittels magnetischer Anziehungskräfte in Wirkverbindung steht,
• ein Gleitelement auf Höhe des ersten Führungslängsschlitzes (26) aufweist, und/oder
• im Wesentlichen aus Aluminium oder einer Stahllegierung besteht.

11. Kamerasystem (1) nach einem der vorangegangenen Ansprüche,
**dadurch gekennzeichnet, dass**
• der Optikträger (200) im Wesentlichen
▪ aus Aluminium besteht und/oder
▪ zylindrisch ist, und/oder
• das optische Element (17-18, 27-29, 47) eine Linse oder eine Linsengruppe ist.

12. Kamerasystem (1) nach einem der vorangegangenen Ansprüche,
**gekennzeichnet durch**
• einen zweiten Wagen (30), der
▪ eine optische Baugruppe mit wenigstens einem optischen Element (37-39) und einen Optikträger 200 aufweist,
▪ im Tubusinnenraum (3) entlang der optischen Achse (4) linear beweglich angeordnet ist, und
▪ in einer zur optischen Achse (4) senkrechten Ebene durch den Tubuskörper (2) im Wesentlichen spielfrei gelagert ist,
• ein vom Führungssystem entkoppeltes zweites Antriebssystem (80) zur Bewegung des zweiten Wagens (30) entlang der optischen Achse (4),
• ein am zweiten Wagen (30) angeordnetes zweites Positionsgeberelement (31) und
• einen zweiten Abtastsensor (91) zum derartigen Erfassen des zweiten Positionsgeberelementes (31), dass ein positionsabhängiges Abtastsignal, das mit der linearen Position des zweiten Wagens (30) verknüpft ist, erzeugbar ist, sodass eine lineare Position des zweiten Wagens (30) ableitbar ist.

13. Kamerasystem (1) nach einem der vorangegangenen Ansprüche,
**dadurch gekennzeichnet, dass**
der optische Sensor (51) ausgestaltet ist als CMOS-Sensor, als CCD-Sensor oder als Pixelarray-Sensor.

14. Kamerasystem (1) nach einem der vorangegangenen Ansprüche,
**dadurch gekennzeichnet, dass**
das Zoomobjektiv als ein Vario-Objektiv ausgestaltet ist, das insbesondere über eine Zoomfunktion verfügt, bei welcher eine Vergrösserungsstufe in Abhängigkeit von einer bestimmten Distanz zwischen dem Kamerasystem und einem Ziel einstellbar ist.

15. Lasertracker (100, 110) mit einem Kamerasystem (1) nach einem der vorangegangenen Ansprüche.

## Claims

1. A camera system (1) comprising a zoom lens, in particular for use in a surveying device, having
- a tubular guide system having a tube body (2), which defines a tube interior (3) and an optical axis (4),
- a sensor module (50), which is arranged downstream from the guide system, having an optical sensor (51) for acquiring optical radiation,
- at least one first carriage (20), which
- has an optical assembly having at least one optical element (27-29) and an optics carrier (200),
- is arranged so it is linearly movable in the tube interior (3) along the optical axis (4), and
- is mounted essentially without play in a plane through the tube body (2) perpendicular to the optical axis (4), and
- a first drive system (60), which is decoupled from the guide system, for moving the first carriage (20) along the optical axis (4), **characterized in that**
- the first carriage (20) has a first position encoder element (21, 21'), and
- a first scanning sensor (71, 71') is embodied for the acquisition of the first position encoder element (21, 21') such that a position-dependent first scanning signal, which is linked to the linear position of the first carriage (20), can be generated, so that a linear position of the first carriage (20) is derivable.

2. The camera system (1) as claimed in claim 1, **characterized in that**
the optics carrier (200)
- is ball-mounted, in particular mounted by means of a ball cage, or
- has at least two, in particular at least three sliding elements (23, 24) for the plain-bearing mounting of the first carriage (20) without play, in particular wherein the optics carrier (200) at least has
- a sliding element (24), which is turned for adjustment, in particular made of a steel or copper alloy, especially steel or bronze, and/or
- a sliding element (23) which can be pre-tensioned by means of a pre-tension element (23a).

3. The camera system (1) as claimed in claim 1 or claim 2,
**characterized in that**
the first position encoder element (21)
- is arranged on the optics carrier (200), in particular wherein the first scanning sensor (71) for acquiring the first position encoder element (21) is positioned at a first acquisition opening (22) of the tube body (2), and/or
- is embodied as a glass scale.

4. The camera system (1) as claimed in any one of the preceding claims,
**characterized by**
at least one fixed optical assembly (10, 40) having in each case at least one optical element (17, 18, 47), which is arranged in the tube interior (3) along the optical axis (4), and which is adjustable in particular.

5. The camera system (1) as claimed in claim 4,
**characterized in that**
the at least one fixed optical assembly (10, 40) is embodied as
- a first fixed optical assembly (10) having at least one optical element (17, 18), which is attached at the entry of the tube interior (3), and/or
- a second fixed optical assembly (40) having at least one optical element (47), which is attached on the end of the tube interior (3) facing toward the sensor module (50).

6. The camera system (1) as claimed in any one of the preceding claims,
**characterized in that**
the first drive system (60) at least has
- a first motor (61), in particular embodied as a direct-current motor, and
- a first movement transmitting element (65), wherein
- a first driver (25, 25') forms a connection between the first movement-transmitting element (65) and the first carriage (20), in particular is installed both on the first movement-transmitting element (65) and also on the first carriage (20), and
- the tube body (2) has a first guide longitudinal slot (26) for the first driver (25, 25'), in particular parallel to the optical axis (4).

7. The camera system (1) as claimed in claim 6,
**characterized in that**
the first drive system (60) additionally has
- a first deflection roller (62), which is rotatable by the first motor (61), and which can be pre-tensioned in particular, and
- a first belt (64), in particular embodied as a toothed belt, which is movable in particular by a rotation of the first deflection roller (62), wherein the first movement-transmitting element (65) is fastened on the first belt (64).

8. The camera system (1) as claimed in claim 6 or claim 7,
**characterized in that**
the first driver (25) is part of the first carriage (20) and is connected without play to, in particular screwed onto, the optics carrier (200), in particular wherein the first driver (25)
- is connected to the first movement-transmitting element (65) via a first ball joint (66),
- has a sliding element at the height of the first guide longitudinal slot (26), and/or
- essentially consists of aluminum or of a steel alloy.

9. The camera system (1) as claimed in claim 8,
**characterized in that**
- the first position encoder element (21) is arranged on the first driver (25), or
- the first driver (25) is embodied as the first position encoder element (21').

10. The camera system (1) as claimed in claim 6 or claim 7,
**characterized in that**
the first driver (25') is connected to the first movement-transmitting element (65) without play and
- is connected via a first ball joint (66) or
- is operationally linked by means of magnetic attraction forces
- to the first carriage (20),
- has a sliding element at the height of the first guide longitudinal slot (26), and/or
- essentially consists of aluminum or a steel alloy.

11. The camera system (1) as claimed in any one of the preceding claims,
**characterized in that**
- the optics carrier (200) essentially
- consists of aluminum and/or
- is cylindrical, and/or
- the optical element (17-18, 27-29, 47) is a lens or a lens group.

12. The camera system (1) as claimed in any one of the preceding claims,
**characterized by**
- a second carriage (30), which
- has an optical assembly having at least one optical element (37-39) and an optics carrier (200),
- is arranged so it is linearly movable in the tube interior (3) along the optical axis (4), and
- is mounted essentially without play in a plane through the tube body (2) perpendicular to the optical axis (4),
- a second drive system (80), which is decoupled from the guide system, for moving the second carriage (30) along the optical axis (4),
- a second position encoder element (31) arranged on the second carriage (30), and
- a second scanning sensor (91) for acquiring the second position encoder element (31) such that a position-dependent scanning signal, which is linked to the linear position of the second carriage (30), can be generated, so that a linear position of the second carriage (30) is derivable.

13. The camera system (1) as claimed in any one of the preceding claims,
**characterized in that**
the optical sensor (51) is embodied as a CMOS sensor, as a CCD sensor, or as a pixel array sensor.

14. The camera system (1) as claimed in any one of the preceding claims,
**characterized in that**
the zoom lens is embodied as a vario-lens, which has a zoom function in particular, in which an enlargement stage is settable in dependence on a determined distance between the camera system and a target.

15. A laser tracker (100, 110) comprising a camera system (1) as claimed in any one of the preceding claims.

## Revendications

1. Système de caméra (1) avec un objectif à zoom, en particulier pour l'utilisation dans un appareil de mesure, qui présente :
• un système de guidage du type tube avec un corps de tube (2) qui définit un intérieur de tube (3) et un axe optique (4),
• un module de capteur (50) placé en aval du système de guidage avec un capteur optique (51) pour la détection de rayonnement optique,
• au moins un premier chariot (20) qui présente
• un sous-ensemble optique avec au moins un élément optique (27-29) et un support d'optique (200),
• est placé dans l'intérieur du tube (3) en étant mobile linéairement le long de l'axe optique (4) et
• est positionné substantiellement sans jeu dans un plan perpendiculaire à l'axe optique (4) à travers le corps du tube (2), et
• un premier système d'entraînement (60) découplé du système de guidage pour déplacer le premier chariot (20) le long de l'axe optique (4),
**caractérisé en ce que**
• le premier chariot (20) présente un premier élément capteur de position (21, 21') et
• un premier capteur de balayage (71, 71') est configuré pour la détection du premier élément capteur de position (21, 21') tel qu'un premier signal de balayage dépendant de la position qui est associé à la position linéaire du premier chariot (20) peut être généré si bien qu'une position linéaire du premier chariot (20) peut être dérivée.

2. Système de caméra (1) selon la revendication 1, **caractérisé en ce que** le support de l'optique (200)
• est positionné sur un roulement à billes, en particulier est positionné au moyen d'une cage à billes, ou
• présente, pour le positionnement sans jeu, guidé de manière coulissante, du premier chariot (20) au moins deux, en particulier au moins trois éléments coulissants (23, 24), en particulier cependant que le support de l'optique (200) présente au moins :
▪ un élément coulissant à rotation ajustée (24), en particulier en un alliage d'acier ou de cuivre, tout particulièrement en acier ou en bronze, et/ou
▪ un élément coulissant qui peut être précontraint (23) au moyen d'un élément de précontrainte (23a).

3. Système de caméra (1) selon la revendication 1 ou la revendication 2, **caractérisé en ce que** le premier élément capteur de position (21)
• est placé sur le support de l'optique (200), en particulier cependant que le premier capteur de balayage (71) pour détecter le premier élément capteur de position (21) est positionné sur une première ouverture de détection (22) d.u corps de tube (2) et/ou
• est configuré comme une règle en verre.

4. Système de caméra (1) selon l'une des revendications précédentes, **caractérisé par** au moins un sous-ensemble optique fixe (10, 40), avec respectivement au moins un élément optique (17, 18, 47), qui est placé dans l'intérieur du tube (3) le long de l'axe optique (4) et qui est en particulier ajustable.

5. Système de caméra (1) selon la revendication 4, **caractérisé en ce que** le sous-ensemble optique fixe qui existe au moins (10, 40) est configuré en tant
• que premier sous-ensemble optique fixe (10), avec au moins un élément optique (17, 18), qui est placé à l'entrée de l'intérieur du tube (3) et/ou
• que second sous-ensemble optique fixe (40), avec au moins un élément optique (47), qui est fixé à l'extrémité de l'intérieur du tube (3) qui est tournée vers le module de capteur (50).

6. Système de caméra (1) selon l'une des revendications précédentes, **caractérisé en ce que** le premier système d'entraînement (60) présente au moins
• un premier moteur (61), en particulier est configuré comme un moteur à courant continu, et
• un premier élément qui transmet le mouvement (65), cependant
• qu'un premier entraîneur (25, 25') forme une jonction entre le premier élément qui transmet le mouvement (65) et le premier chariot (20), en particulier qu'il est monté aussi bien sur le premier élément qui transmet le mouvement (65) que sur le premier chariot (20), et
• que le corps du tube (2) présente une première fente longitudinale de guidage (26) pour le premier entraîneur (25, 25'), en particulier parallèlement à l'axe optique (4).

7. Système de caméra (1) selon la revendication 6, **caractérisé en ce que** le premier système d'entraînement (60) présente de plus
• un premier galet de renvoi (62) qui est rotatif par le premier moteur (61) et qui en particulier peut être précontraint, et
• une première courroie (64), en particulier configurée comme une courroie dentée, qui est mobile en particulier par une rotation du premier galet de renvoi (62),
cependant que le premier élément qui transmet le mouvement (65) est fixé à la première courroie (64).

8. Système de caméra (1) selon la revendication 6 ou 7, **caractérisé en ce que** le premier entraîneur (25) est une pièce du premier chariot (20) et est relié sans jeu au support de l'optique (200), en particulier est vissé à celui-ci, en particulier cependant que le premier entraîneur (25)
• est relié au premier élément qui transmet le mouvement (65) par une première articulation à billes (66),
• présente un élément coulissant à hauteur de la première fente longitudinale de guidage (26) et/ou
• est constitué substantiellement en aluminium ou en un alliage d'acier.

9. Système de caméra (1) selon la revendication 8, **caractérisé en ce que**
• le premier élément capteur de position (21) est placé sur le premier entraîneur (25) ou
• le premier entraîneur (25) est configuré comme premier élément capteur de position (21').

10. Système de caméra (1) selon la revendication 6 ou 7, **caractérisé en ce que** le premier entraîneur (25') est relié sans jeu au premier élément qui transmet le mouvement (65) et
• est relié au premier chariot (20)
▪ par une première articulation à bille (66) ou
▪ est en relation active par des forces d'attraction magnétique,
• présente un élément coulissant à hauteur de la première fente longitudinale de guidage (26) et/ou
• est constitué substantiellement en aluminium ou en un alliage d'acier.

11. Système de caméra (1) selon l'une des revendications précédentes, **caractérisé en ce que**
• le support de l'optique (200) est constitué substantiellement
▪ en aluminium et/ou
▪ est cylindrique et/ou
• l'élément optique (17-18, 27-29, 47) est une lentille ou un groupe de lentilles.

12. Système de caméra (1) selon l'une des revendications précédentes, **caractérisé par**
• un second chariot (30) qui
▪ présente un sous-ensemble optique avec au moins un élément optique (37-39) et un support de l'optique (200),
▪ est placé mobile linéairement dans l'intérieur du tube (3) le long de l'axe optique (4) et
▪ est positionné substantiellement sans jeu dans un plan perpendiculaire à l'axe optique (4) à travers le corps du tube (2),
• un second système d'entraînement (80) découplé du système de guidage pour le déplacement du second chariot (30) le long de l'axe optique (4),
• un second élément capteur de position (31) placé sur le second chariot (30) et
• un second capteur de balayage (91) pour la détection du second élément capteur de position (31) de telle manière qu'un signal de balayage dépendant de la position qui est associé à la position linéaire du second chariot (30) peut être généré si bien qu'une position linéaire du second chariot (30) peut être dérivée.

13. Système de caméra (1) selon l'une des revendications précédentes, **caractérisé en ce que** le capteur optique (51) est configuré comme un capteur CMOS, comme un capteur CDD ou comme un capteur de réseau de pixels.

14. Système de caméra (1) selon l'une des revendications précédentes, **caractérisé en ce que** l'objectif de zoom est configuré comme un objectif Vario qui dispose en particulier d'une fonction de zoom pour laquelle un facteur d'agrandissement peut être réglé en fonction d'une certaine distance entre le système de caméra et une cible.

15. Système de poursuite laser (100, 110) avec un système de caméra (1) selon l'une des revendications précédentes.
